# EUROPEAN PATENT APPLICATION

(11) **EP 2 147 775 A2**
(43) Date of publication of application: **27.01.2010**
(21) Application number: 09166279.1
(22) Date of filing: 23.07.2009
(51) Int. Cl.: B29C 65/52, B29C 65/54, B29C 65/78, B65H 3/22, B25J 15/00, B65G 47/90, B05C 1/06, B29K 105/04, B29L 31/58

(54) **Machine and method for gluing porous material slabs**

(30) Priority: 23.07.2008 IT MO20080200
(71) Applicant: Aper S.r.l., 40129 Bologna (IT)
(72) Inventor: Ferri, Stefano, 40011, Anzola Emilia (BO) (IT); Romagnoli, Massimo, 61030, Montefelcino (PU) (IT)
(74) Representative: Cicconetti, Andrea

(57) **Abstract**

A machine for gluing porous material slabs (3, 4), in particular for making a mattress (2) or an insulating element, comprises a working plane (64) for supporting a porous material first slab (3) and a second porous material slab (4), glue-distributing means (14) that is movable for distributing glue on said first slab (3) and/or on said second slab (4), and gripping means (12; 112) for grasping and moving said first slab (3) and/or said second slab; the gripping means comprises at least a gripping unit (12; 112) provided with a pair of needle elements (49, 48) arranged alongside and divergent, said needle elements being movable linearly between an extended position (D) in which said needle elements interact with, in particular pierce, said slabs (3, 4) and a retracted position (E) in which said needle elements do not interact with said slabs (3, 4).

## Description

The invention relates to a machine and a method for gluing porous material slabs.

In particular, the invention relates to a machine and a method for gluing slabs, for example made of latex foam or of polyurethane, for forming mattresses, or also, for example, insulating elements.

Mattresses are known that consist of a first slab and of a second slab made of latex foam or polyurethane.

The first slab and the second slab respectively comprise a first flat surface and a second flat surface arranged for forming, once the mattress has been assembled, the external surfaces of the mattress.

Further, the first slab and the second slab respectively comprise a first coupling surface and a second coupling surface respectively opposite the first and the second flat surface.

In particular, the first coupling surface and the second coupling surface are shaped and couplable in a shapingly coupled manner.

In order to assemble a mattress or an insulating element, it is known to position, by one or more operators, the first slab and the second slab on respective supporting surfaces so that the first flat surface and the second flat surface face, and rest, on the respective supporting surfaces.

In this manner, the first coupling surface and the second coupling surface face upwards and are accessible to the operator.

Subsequently, the operator distributes a layer of glue on the first coupling surface and/or on the second coupling surface. Still subsequently, the operator lifts the first slab from the respective supporting surface and superimposes the first slab on the second slab by rotating the first slab such that the first coupling surface contacts and adheres to the second coupling surface.

It should be noted how the aforesaid operations, necessary for gluing porous material slabs intended for forming a mattress, do not enable high productivity to be obtained.

In fact, such operations, which are particularly slow and uncomfortable, are carried out manually by one or more operators. The operation of lifting the slabs by the operator is tiring and uncomfortable due to the dimensions and the characteristic of the material. The slabs made of a porous material are in fact heavy and flexible, which are characteristic that make it difficult to lift the slabs in a stiff manner, i.e. maintaining the slabs substantially planar and horizontal.

It is further possible that the operator distributes the layer of glue in a non-homogenous manner on the first and/or on the second coupling surface, or that this layer of glue is absent from some points that are hardly reachable by the operator. In addition, the glue enables maximum efficacy to be obtained if the glue is distributed at points of the coupling surfaces that are intended for coming into mutual contact, something that is very difficult to obtain if the operation of distributing the glue is carried out manually. Further, in order for the layer of glue to adhere correctly, it is advisable to exert an appropriate pressure in a substantially vertical direction once the slabs have been coupled, this pressure being exerted by the operator, which, however, is not able to reach easily each area of the slabs.

This means that the first slab is not effectively glued to the second slab, which, in use and in time, may cause problems due to the detachment, even partial, of the first slab from the second slab.

For handling, in particular gripping or releasing, objects made of perforable material, for example food or the like, needle gripping devices are provided. Such devices comprise curved needles, that cannot, however, be used to lift porous material slabs, in particular made of latex foam or of polyurethane, of medium and large dimensions. In fact, due to the curved shape of the needles, when the needles penetrate the material they determine a very great concentration of force that is generated in the lifting of the slab in a very reduced zone, even punctual, this being able to cause a partial and localised removal and/or rip of the material in this zone, such as to compromise the aesthetic appearance of the element.

An object of the invention is to make a machine for gluing porous material slabs, in particular for gluing slabs, for example made of latex foam or of polyurethane, to make mattresses, or also, for example, insulating elements.

Another object is to provide a machine for gluing porous material slabs provided with gripping means that enable the slabs to be moved to lift the slabs and lower the slabs in an effective manner without spoiling the material with which the slabs are made and without compromising the aesthetic appearance of the finished product that is obtainable from such slabs.

A further object is to provide a machine for gluing porous material slabs that enables mattresses to be formed in a rapid and automatic manner, i.e. without the need for direct interventions by one or more operators.

A still further object is to provide a method for lifting and gluing porous material slabs that enables a finished product, in particular a mattress, of better quality to be obtained.

Such aims and still others are all achieved by a machine and by a method provided according to one or more of the claims below.

Owing to the invention it is possible to obtain a machine for moving and gluing porous material slabs that enables such slabs to be glued in a rapid and effective manner.

The machine according to the invention, owing to the gripping means comprising needle elements that penetrate the porous material, enables said slabs to be moved, i.e. enables said slabs to be lifted and lowered in a firm and effective manner, preventing, for example, the slabs from sliding or detaching. The particular divergent arrangement of the needle elements and the flat and straight conformation enables the slabs to be pierced without tearing or ripping locally the porous material with which said slabs are made. In other words, the needle elements prevent tears or rips remaining on the slabs after the slabs have been pierced and lifted. It should be noted that the needle elements also enable even very thin porous material slabs to be lifted.

Owing to the machine of the invention and to the operating method thereof, it is further possible, by the same gripping means, to exert pressure that is almost even and distributed on the slabs. This enables the previously distributed glue to be activated so that the slabs are glued together in a more effective and resistant manner.

Further, said machine, by said glue-distributing means, enables said first slab to be glued in a substantially automatic manner to said second slab so as significantly to reduce, and even to eliminate, the operations that had to be carried out manually by the operator.

Further, the glue-distributing means, comprising for example dispensing nozzles, enables glue to be distributed evenly on the internal surfaces of the slabs for better subsequent adhesion.

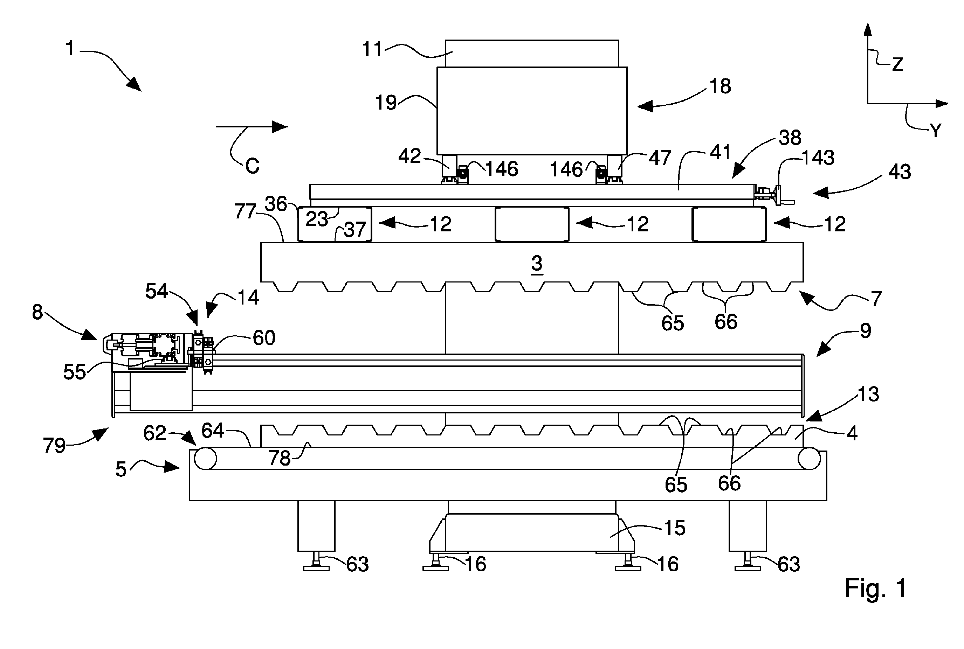

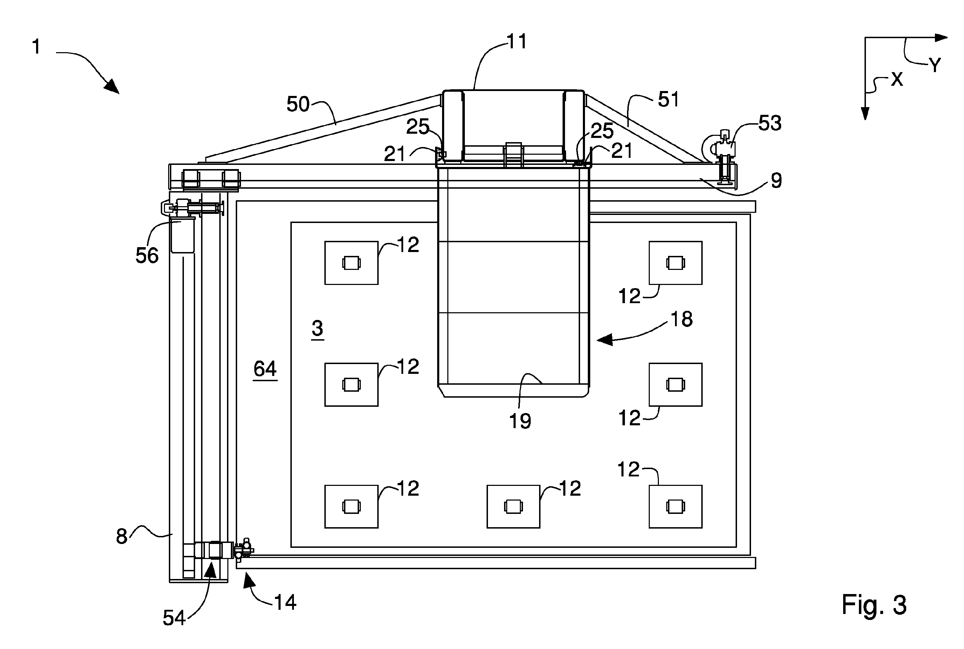

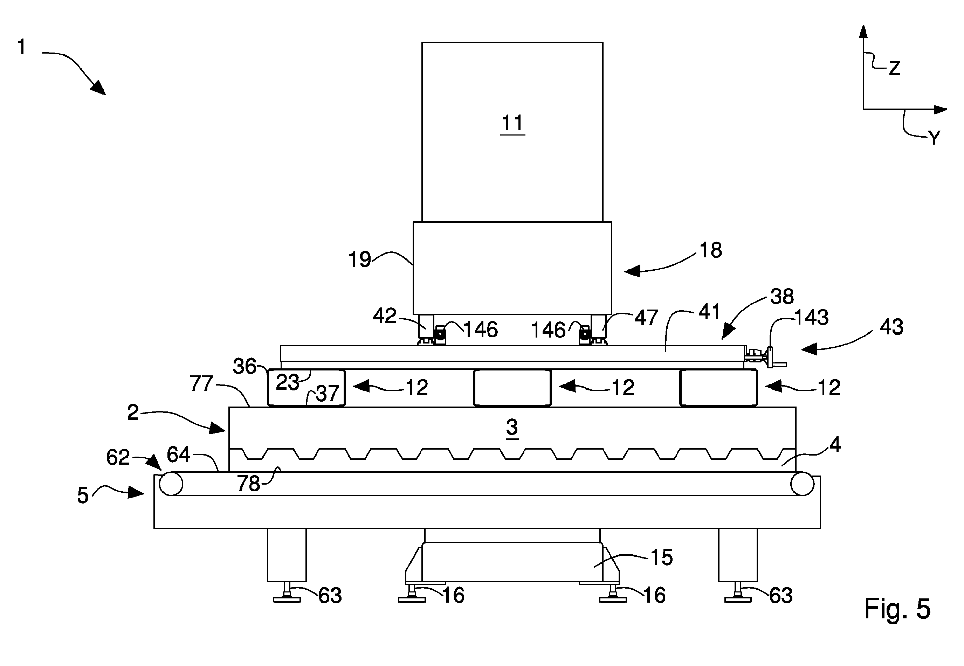

The invention can be better understood and implemented with reference to the attached drawings which illustrate some embodiments thereof by way of non-limiting example, in which:
Figure 1 is a schematic front view of a machine for gluing porous material slabs in a first operating configuration;
Figure 2 is a schematic side view of the machine in Figure 1 in the first operating configuration, in which some elements have been removed to better show others elements;
Figure 3 is a schematic top view of the machine in Figure 1 in which some elements have been removed to better show others elements;
Figure 4 is a top view of positioning guides included in the machine in Figure 1;
Figure 5 is a schematic front view of the machine in Figure 1 in a second operating configuration;
Figure 6 is a schematic side view of the machine in Figure 1 in the second operating configuration in which some elements have been removed to better show others elements;
Figure 7 is a front view of a needle element;
Figure 8 is an enlarged view of Figure 7;
Figure 9 is a side view of a needle of said needle element;
Figure 10 is a enlarged schematic front view of a first embodiment of a glue-distributing means included in the machine in Figure 1;
Figure 11 is an enlarged detail of Figure 10;
Figure 12 is a schematic front view of a second embodiment of glue-distributing means included in the machine in Figure 1;
Figure 13 is a schematic front view of a third embodiment of glue-distributing means included in the machine in Figure 1.
Figure 14 is a schematic side view of another embodiment of a machine for gluing porous material slabs in a first operating configuration, in which some elements have been removed to better show others elements;
Figure 15 is a schematic side view of the machine in Figure 14 in a second operating configuration;
Figure 16 is a schematic plan view of the machine in Figure 14;
Figure 17 is a schematic front view of the machine in Figure 14;
Figure 18 is a schematic front view of a gripping unit comprising a pair of needle elements in a retracted position;
Figure 19 is a view like that of Figure 18 in which the needle elements are in an extended position;
Figure 20 is a schematic bottom plan view of the gripping unit in Figure 18;
Figure 21 is a schematic top plan view of the gripping unit in Figure 18.
With reference to Figures 1 to 3, there is shown a machine 1 for gluing a first slab 3 to a second slab 4, both made of a porous material, for example latex rubber or polyurethane, for making a mattress 2 (Figure 5), or also, for example, insulating elements. In particular, the first slab 3 and the second slab 4, having a substantially equal width and length, respectively comprise a first flat surface 77 and a second flat surface 78 arranged for forming, once the mattress 2 has been assembled, the external surfaces of the mattress.

Further, the first slab 3 and the second slab 4 respectively comprise a first coupling surface 7 and a second coupling surface 13 respectively opposite the first flat surface 77 and the second flat surface 78.

In particular, the first coupling surface 7 and the second coupling surface 13 each comprise respective recesses 66 and projections 65 shaped so as to be couplable in a shapingly coupled manner.

The aforesaid machine 1 comprises a tubular base 15, of substantially rectangular shape, supported by a plurality of foot elements 16, the height of each one of which is adjustable.

From the base 15 an upright 11 projects, which for example is made of sheet metal and has a parallelepipedon shape, extending substantially parallelly to a first axis Z that is substantially vertical.

The machine 1 comprises supporting means 18, 22 that is suitable for supporting and moving gripping means 12 of the slabs 3, 4.

The supporting means 18, 22 comprises a pneumatic cylinder 22 housed in the upright 11, and a slide 18 moved by the pneumatic cylinder 22 along the upright 11.

The upright 11, which is internally hollow, comprises first guides 25 extending substantially parallelly to the first axis Z.

The first guides 25 are arranged for engaging with respective first sliding blocks 21 fixed to an end portion 20 of the slide 18, the slide 18 projecting from the upright 11 substantially parallelly to a second axis X, which is substantially horizontal and perpendicular to the first axis Z.

In an embodiment of the invention that is not shown the machine 1 comprises a gearmotor housed in the upright 11 and arranged for moving the slide 18 along the upright 11.

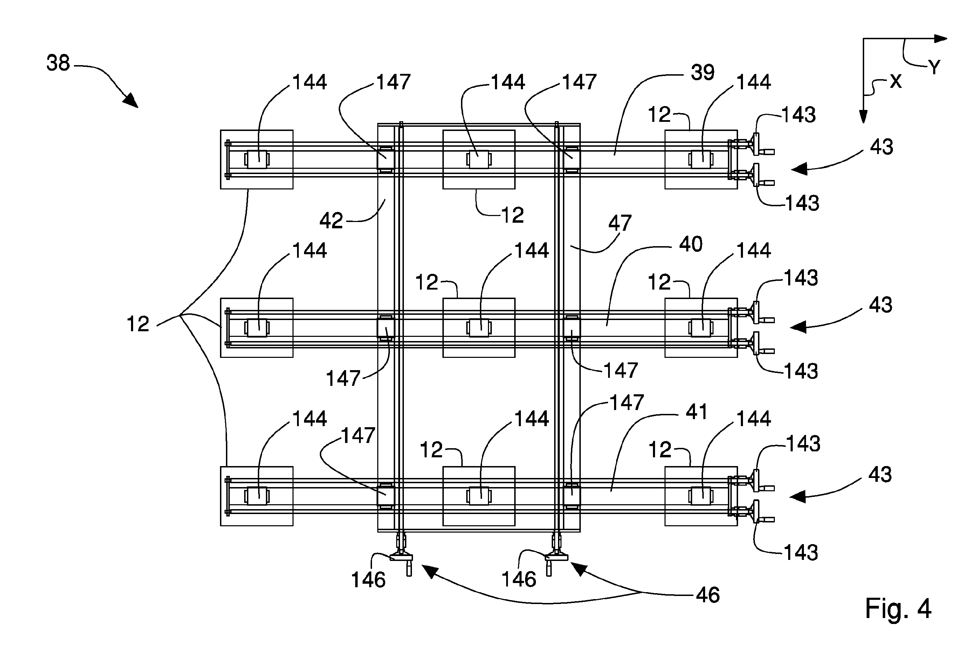

The machine 1 further comprises positioning guides 38, shown in detail in Figure 4, supported by the slide 18.

The positioning guides 38 comprise a first guide element 42 and a second guide element 47, that are substantially parallel to one another, extending substantially parallelly to the second axis X.

In particular, the first guide element 42 and the second guide element 47 are mounted cantilevered on the slide 18.

The positioning guides 38 further comprise a third guide element 39, a fourth guide element 40 and a fifth guide element 41 that are substantially parallel to one another and extend substantially parallelly to a third axis Y, which is substantially horizontal and perpendicular to the first axis Z, the first axis Z, the second axis X and the third axis Y forming a triad of Cartesian axes.

In particular, the third guide element 39, the fourth guide element 40 and the fifth guide element 41 are slidably supported by the first guide element 42 and by the second guide element 47 substantially parallelly to the second axis X.

The machine 1 further comprises movement means 46 for moving the third guide element 39, the fourth guide element 40 and the fifth guide element 41 along the second axis X towards or away from one another, in function of a transverse dimension of the first slab 3.

In particular, the movement means 46 comprises crank means 146 acting on ballscrews 147.

In an embodiment of the invention that is not shown the third guide element 39, the fourth guide element 40 and the fifth guide element 41 are moved manually by an operator along the second axis X and locked by the operator in a desired position.

In a further embodiment of the invention, which is not shown, the third guide element 39, the fourth guide element 40 and the fifth guide element 41 are automatically moved and locked along the second axis X by a servomechanism acting on the ballscrews 147.

The third guide element 39, the fourth guide element 40 and the fifth guide element 41 each support the gripping means 12 for grasping, in use, the first slab 3.

The gripping means comprises a plurality of gripping units 12, in particular nine in the embodiment shown in the Figures, each of which comprises a pair of needle elements 48, 49. In particular, it should be noted that each guide element 39, 40, 41 supports three gripping units 12.

In a further embodiment of the invention, which is not shown, it is provided that the third guide element 39, the fourth guide element 40 and the fifth guide element 41 each support a number of gripping units 12 that is less or more than three.

In a still further embodiment of the invention, which is not shown, the third guide element 39, the fourth guide element 40 and the fifth guide element 41 are not provided and the gripping units 12 are slidably supported substantially parallelly to the second axis X by the first guide element 42 and by the second guide element 47.

In another embodiment of the invention, which is not shown, the first guide element 42 and the second guide element 47 are not provided, whilst the third guide element 39, the fourth guide element 40 and the fifth guide element 41 are mounted in a cantilevered manner on the slide 18 and slidably support the gripping units 12 that are substantially parallelly to the third axis Y.

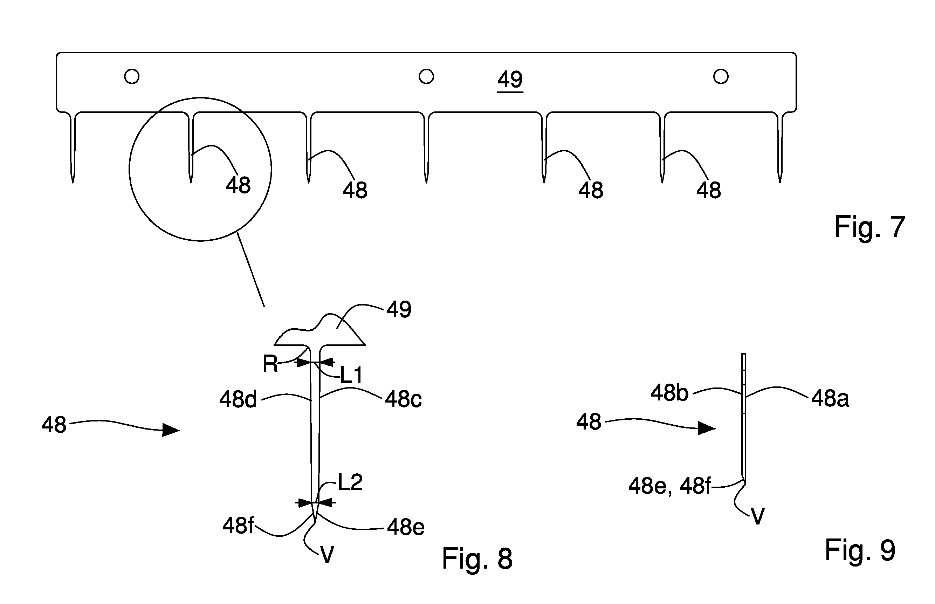

With reference to Figures 7 to 9, the needle elements comprise an elongated and substantially flat body 49, and a plurality of straight and flat needles 48 that are suitably spaced apart from one another, in particular at a reciprocal distance of 50 mm. The needles 48, aligned along a row, project from the body 49, and viewed laterally, have an end portion shaped as a tip with an oblique side to enable better inside penetration of the porous material to be pierced.

In particular, each needle 48 comprises an upper wall 48a, a lower wall 48b that are substantially flat, parallel, opposite and connected by a first side wall 48c and by a second side wall 48d, which are also flat and opposite, as better shown in Figures 8 and 9. The first side wall 48c and the second side wall 48d, at the first ends thereof, are connected to the body 49 by substantially equal connections R. Each needle 48 further comprises a first oblique wall 48e, extending from the first side wall 48c, and a second oblique wall 48f, extending from the second side wall 48d. The first oblique wall 48e and the second oblique wall 48f, which are respectively connected to the first side wall 48c and to the second side wall 48d at the second ends thereof opposite the first ends, join together to form a vertex V of the needle 48. It should be noted that the first side wall 48c and the second side wall 48d are separated by a first distance L1 measured substantially at the first ends thereof and by a second distance L2 measured substantially at the second ends thereof, the second distance L2 being less than the first distance L1. This confers a tapered shape to the needle 48 that makes the needle particularly suitable for piercing material without damaging or spoiling the material. The upper wall 48a and the lower wall 48b, which are substantially parallel to one another, are substantially respectively parallel to two opposite faces of the body 49. The upper wall 48a extends as far as the vertex V, whilst the lower wall 48b is connected to the vertex V by the oblique walls 48e, 48f.

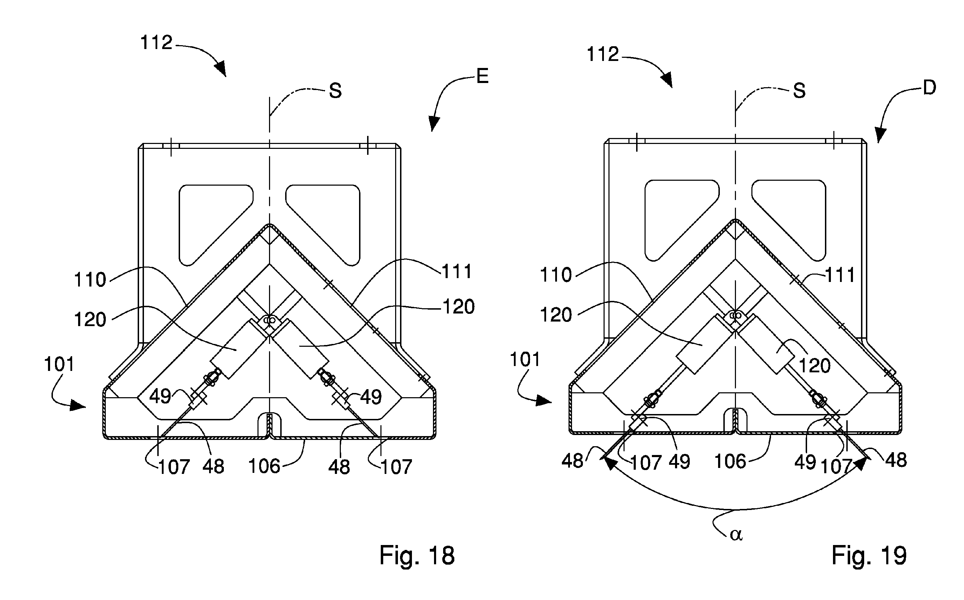

In use, the needle elements 48, 49 are moved by respective actuators 120 between an extended position D (Figure 19), in which the needles 48 are arranged for penetrating the first slab 3, and a retracted position E (Figure 18), in which the needles 48 are contained inside the gripping unit so as not to interact with the first slab 3.

The needle elements 48, 49 are in fact housed in a supporting element 36 comprising an abutting wall 37 provided with a plurality of holes, which are not shown, arranged for being traversed by the needles 48. In use, the abutting wall 37 is arranged for abutting on the first surface 77 of the first slab 3 so as to exert pressure thereupon.

The supporting element 36 comprises a further wall 23, opposite the wall 37, and connectable to the third guide element 39, to the fourth guide element 40 and to the fifth guide element 41 by means of a sliding block-guide connection.

In this manner, the supporting element 36, and the needle elements 48, 49 therewith, are slidably supported by the third guide element 39, by the fourth guide element 40 and by the fifth guide element 41 substantially parallelly to the third axis Y and to the second axis X, inasmuch as, as said above, the third guide element 39, the fourth guide element 40 and the fifth guide element 41 are slidably supported substantially parallelly to the second axis X by the first guide element 42 and by the second guide element 47.

The machine 1 further comprises, as shown in Figure 4, further movement means 43 for moving the supporting elements 36, and the gripping units 12 therewith, along the third axis Y towards or away from one another, in function of a longitudinal dimension of the first slab 3.

In particular, the further movement means 43 comprises further crank means 143 acting on further ballscrews 144.

In an embodiment of the invention, which is not shown, the supporting elements 36, and the gripping units 12 therewith, are moved manually by an operator along the third axis Y and locked by the operator in a desired position.

In a further embodiment of the invention, which is not shown, the supporting elements 36, and the gripping units 12 therewith, are moved, and locked, automatically along the third axis Y by a further servomechanism acting on the further ballscrews 144.

The machine 1 further comprises a crosspiece element 9, shown in Figures 1, 2, 3 and 6, fixed to the upright 11 by means of a supporting arm 50 and a further supporting arm 51.

The crosspiece element 9, extending substantially parallelly to the third axis Y, slidably supports a further crosspiece element 8 that is movable substantially parallelly to the third axis Y by a gearmotor 53.

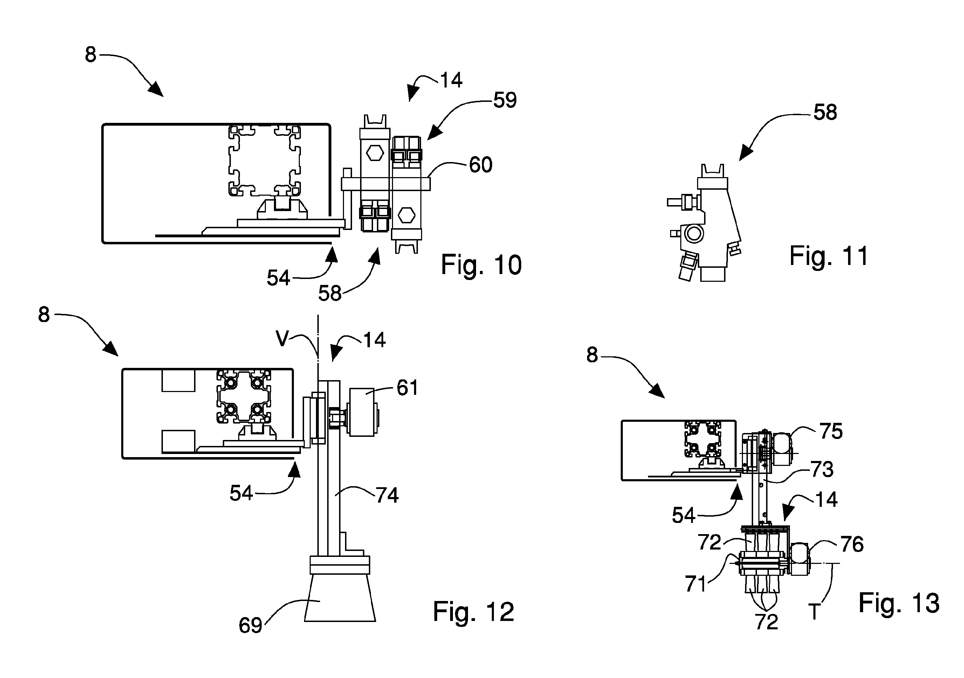

The further crosspiece element 8, extending substantially parallelly to the second axis X, slidably supports a carriage 54, shown in greater detail in Figure 10.

The carriage 54 is movable substantially parallelly to the second axis X by a further gearmotor 56 and supports glue-distributing means 14 by a rod element 60.

The glue-distributing means 14, shown in Figures 10 and 11, comprise a first dispensing nozzle 58 and a second dispensing nozzle 59 each arranged for spraying glue respectively on the first coupling surface 7 and on the second coupling surface 13.

In particular, the first dispensing nozzle 58 and the second dispensing nozzle 59, which are of known type and are substantially structurally and functionally the same as one another, are mounted on the rod element 60 rotated substantially by 180°, one facing upwards and the other facing downwards, so as to spray, in use, respectively a layer of glue on the first coupling surface 7 and on the second coupling surface 13.

The glue can be supplied to the first dispensing nozzle 58 and to the second dispensing nozzle 59 by gravity if a tank containing glue, which is not shown, is positioned above the glue-distributing means 14. Alternatively, the glue can be pressurized by two pneumatic pumps, which are not shown in the Figures, supplied by pressurized air from a solenoid valve, which is not shown. The choice of supplying the glue to the first dispensing nozzle 58 and to the second dispensing nozzle 59 by gravity or by pressurization is a function of the type of glue used. In particular, in the case of glue with a water base with a single component it is possible to supply the glue by gravity, otherwise, in the case of glue with a solvent base or a water base with two components, it is opportune to pressurize the glue to supply the glue to the first dispensing nozzle 58 and to the second dispensing nozzle 59.

In an embodiment of the invention, which is not shown, the glue-distributing means 14 comprises only one between the first dispensing nozzle 58 and the second dispensing nozzle 59.

In a further embodiment of the invention, which is not shown, the glue-distributing means 14 comprises further dispensing nozzles in addition to the first dispensing nozzle 58 and to the second dispensing nozzle 59.

In a further embodiment of the invention, shown in Figure 12, the glue-distributing means 14 comprises a brush 69 connected to the carriage 54 by a support 74.

In this embodiment, a first gearmotor 61 is provided acting on the support 74 for moving the brush 69 substantially parallelly to the first axis Z, and a second gearmotor, which is not shown, for rotating the brush 69 around an axis V that in use is substantially parallel to the first axis Z.

In this manner, it is possible to vary, in use, the distance between the brush 69 and the slabs 3, 4 to enable the brush 69 to distribute the glue on the projections 65 and in the recesses 66.

Further, in this still further embodiment, the glue is supplied to the brush 69 by a pump, which is not shown, that pressurizes the glue by providing the glue with the thrust necessary for reaching the brush 69.

In another embodiment of the invention, shown in Figure 13, the glue-distributing means 14 comprises a plurality of bristles 72 projecting radially from a supporting shaft 71 connected by a further support 73 to the carriage 54.

In this embodiment, there is provided a third gearmotor 75 acting on the further support 73 for moving the supporting shaft 71, and the bristles 72 therewith, substantially parallelly to the first axis Z, and a fourth gearmotor 76, for rotating the supporting shaft 71, and the bristles 72 therewith, around a further axis T, substantially parallel, in use, to the third axis Y.

In this manner, it is possible to vary, in use, the distance between the bristles 72 and the slabs 3, 4 to enable the bristles 72 to distribute the glue on the projections 65 and in the recesses 66.

The machine 1 further comprises conveying means 5 for supporting and moving the first slab 3 and the second slab 4, provided with a plurality of further foot elements 63, the height of which is adjustable (Figures 1, 2, 5 and 6).

The conveying means 5 comprises a conveyor belt 62 defining a working plane 64 that is substantially parallel to the second axis X and to the third axis Y.

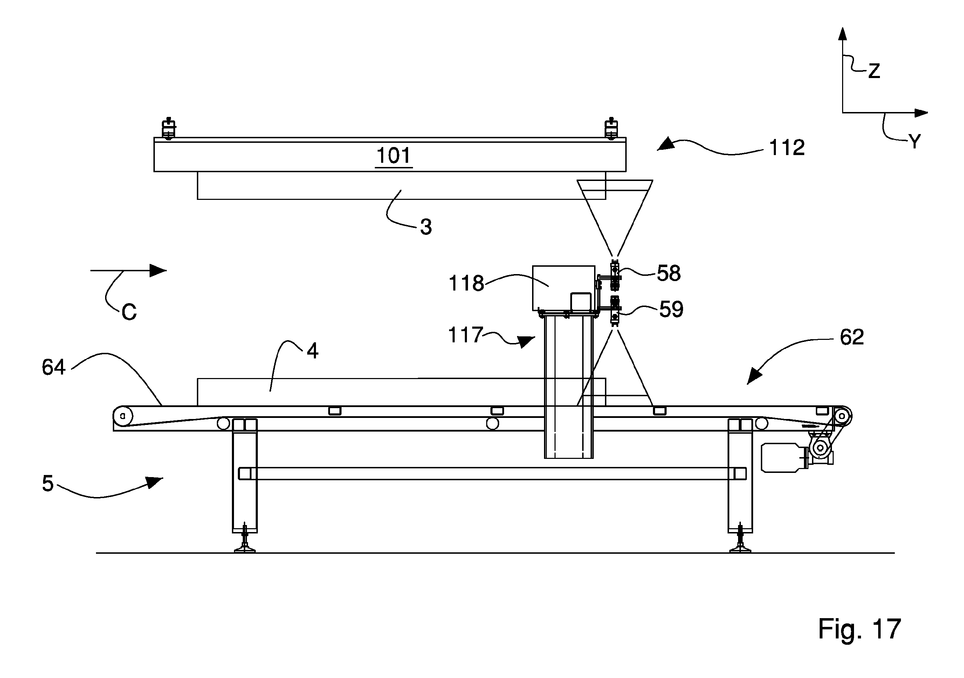

The conveyor belt 62 is movable along an advance direction C, indicated by an arrow in Figures 1 and 17.

The machine 1 further comprises a supply system, which is not shown, provided with a further conveyor belt for conveying the first slab 3 and the second slab 4 to the conveyor belt 62.

Also, the machine 1 comprises an unloading system, which is not shown, provided with a still further conveyor belt for moving the mattresses 2 away from the conveyor belt 62.

The movement of the conveyor belt 62, of the further conveyor belt and of the still further conveyor belt is controlled by a plurality of photocells, which are not shown.

The machine 1 further comprises a plurality of position sensors and of position transducers, so-called "encoders", to control the supporting means, i.e. the slide 18 and the pneumatic cylinder 22. Further sensors can be provided to control the other servomechanisms and gearmotors comprised in the machine 1.

The operation of the machine 1 is disclosed below with particular reference to Figures 1, 2, 5 and 6.

Initially, the first slab 3 is transferred from the further conveyor belt onto the conveyor belt 62, the first coupling surface 7 facing, and resting on, the working plane 64.

Subsequently, the slide 18 is lowered until the abutting walls 37 of the supporting elements 36 contact the first flat surface 77 of the first slab 3, the gripping means 12 having the needles 48 in a retracted position E so that they do not protrude outside the abutting walls 37.

Subsequently, the needle elements 48, 49 are positioned in an extended position D in which the needles 48 protrude outside the abutting wall 37 such as to pierce the first flat surface 77.

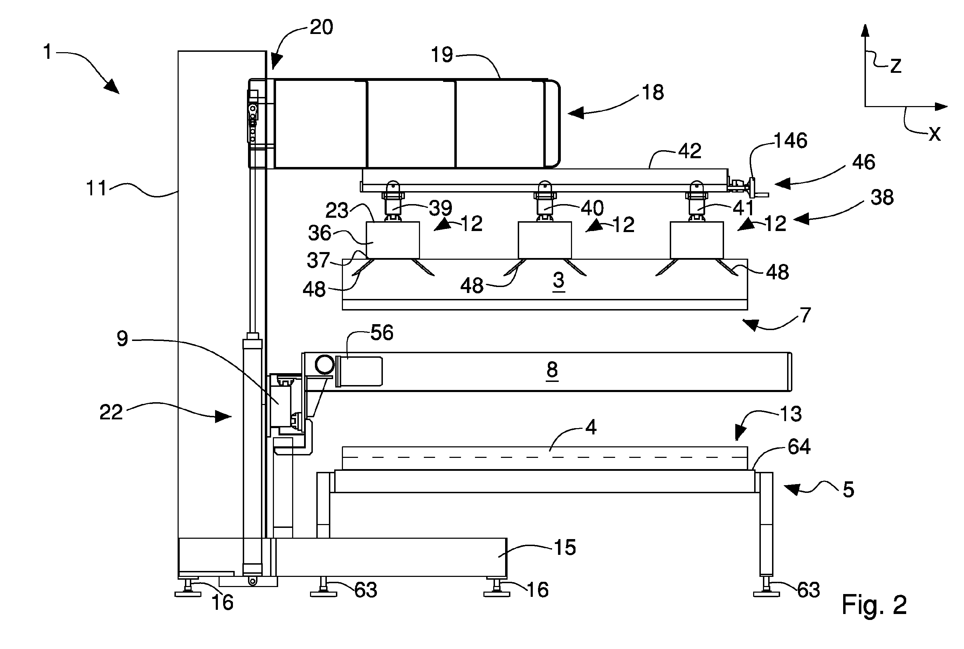

Still subsequently, as shown in Figures 1 and 2, moving the slide 18 away from the working plane 64 is provided so as to lift the first slab 3 from the working plane 64.

Subsequently, positioning on the further conveyor belt a film made of plastics, which is not shown, is provided, the film made of plastics being arranged, in a subsequent gluing step, for preventing the glue from falling onto the working plane 64.

Still subsequently, positioning the second slab 4 on the film made of plastics and transferring the second slab 4 and the film made of plastics on the working plane 64 is provided, the second slab 4 being positioned on the conveyor belt 62 such that the second flat surface 78 faces and rests on the film made of plastics and the second coupling surface 13 faces the first coupling surface 7.

Subsequently, the further crosspiece 8 and the carriage 54 are driven to enable the glue-distributing means 14, suitably moved, to move along the entire extent of the first slab 3 and of the second slab 4 and to distribute the glue on the first coupling surface 7 and/or on the second coupling surface 13.

Still subsequently, the further crosspiece element 8 is substantially positioned at an end 79 of the crosspiece element 9.

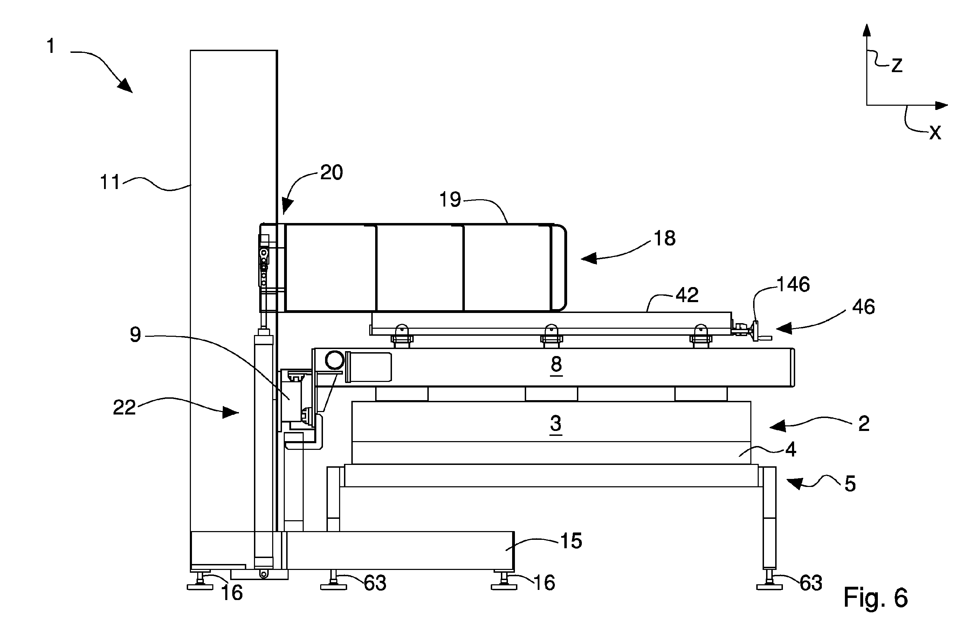

Subsequently, the slide 18 is moved along the first axis Z towards the working plane 64 until so as to superimpose and press the first slab 3 onto the second slab 4, i.e. the first coupling surface 7 against the second coupling surface 13 (Figures 5 and 6). In this step, the gripping units 12 exert pressure on the first flat surface 77 so as to enable the glue to be activated.

In addition, in this step, the slide 18 is vibrated by the pneumatic cylinder 22 such as to promote gluing between the first slab 3 and the second slab 4.

Still subsequently, the needles 48 are taken to the retracted position E and the slide 18 is subsequently moved away from the working plane 64.

Subsequently, by the conveyor belt 62, the thus formed mattress 2 is transferred to the still further conveyor belt, which moves the mattress 2 away from the conveyor belt 62.

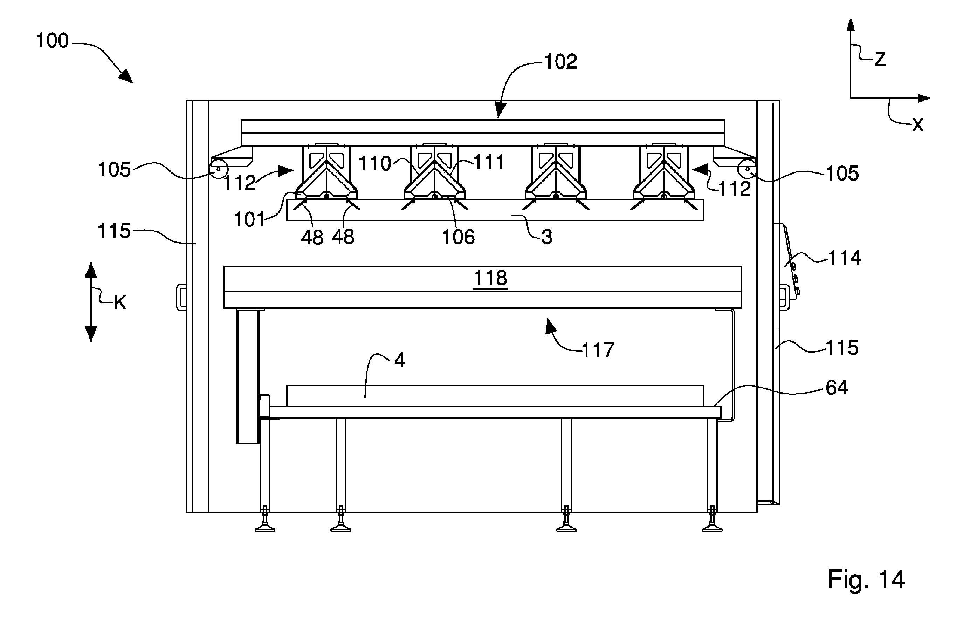

With reference to Figures 14 to 17, there is shown another embodiment of the machine 100 for gluing porous material slabs 3, 4.

The elements of this embodiment of the machine 100 that are structurally and functionally similar to the corresponding elements of the previously disclosed embodiment will be indicated below by the same reference numbers.

The machine 100 comprises gripping means 112 arranged for grasping the slabs 3, 4, the gripping means comprising, in the shown embodiment, four gripping units 112.

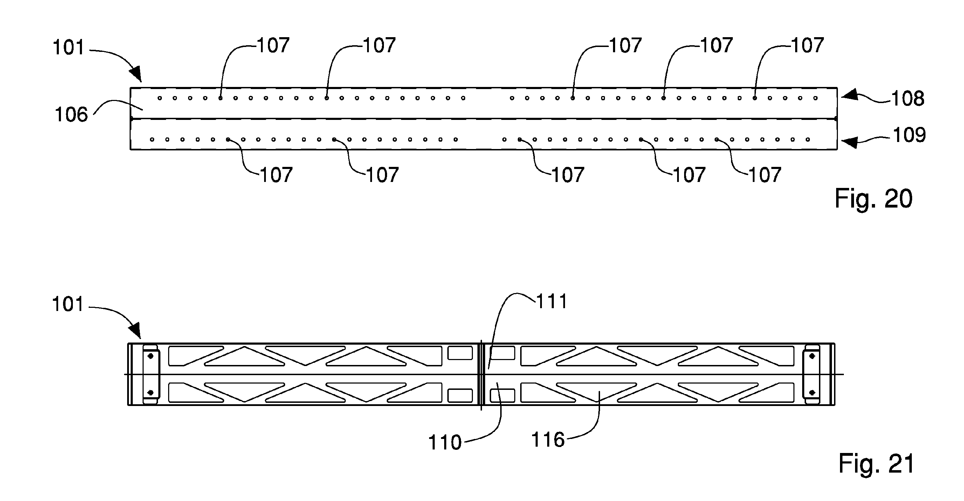

Each gripping unit 112, shown in greater detail in Figures 18 to 21, comprises a longitudinal member 101 extending substantially parallelly to the third axis Y that has a length that is substantially equal to or greater than the extent of the slabs 3, 4, i.e. of the mattress 2, along the third axis Y. The gripping units 112 are fixed by threaded connections to supporting means 102 that comprises a frame comprising in turn two bars 103, 104 arranged such as to form an "X". The frame 102 is movable by guiding wheel 105 that engages respective guiding elements along a movement direction K substantially parallel to the first axis Z. The frame 102 can be moved by a chain, or a belt, driven, for example, by gearmotors. This combined system of guiding wheels 105 and chain enables the gripping units 112 to be moved almost always parallelly to the working plane 64.

With reference to Figures 18 to 21, the longitudinal members 101 have a cross section that is substantially triangular with the base side of the triangle formed by an abutting wall 106 that is substantially parallel to the working plane 64, i.e. substantially horizontal. The abutting wall 106 is provided with openings 107 aligned on two rows 108, 109 that are spaced apart and are substantially parallel. The rows 108, 109 can be substantially symmetrical with respect to the vertex of the triangle.

The openings 107 can be substantially mutually equidistant in the same row, in particular by a distance equal to 50 mm. Each opening 107 is arranged for being traversed by one of the needles 48, thus it should be noted that the distance between two consecutive openings 107 is substantially the same as the distance between two consecutive needles 48. The diameter of an opening 107 is slightly greater than the diameter of the needle 48.

The gripping units 112 further comprise two tilted walls 110, 111 that form the other two sides of the longitudinal member 101. The tilted walls 110, 111 comprise zones 116 in which material is removed in order to lighten the longitudinal members 101.

Each gripping unit 112 is arranged for housing a pair of needle elements 48, 49 positioned in a mutually divergent manner with reference to the abutting wall 106.

The needle elements 48, 49 are arranged divergently so as to form an internal angle α (Figure 19) comprised between 60° and 120°, in particular comprised between 70° and 90°.

Further, they are arranged, for example, in a symmetrical and specular manner with respect to a longitudinal plane S that is substantially orthogonal to the supporting plane 64 and parallel to the third axis Y.

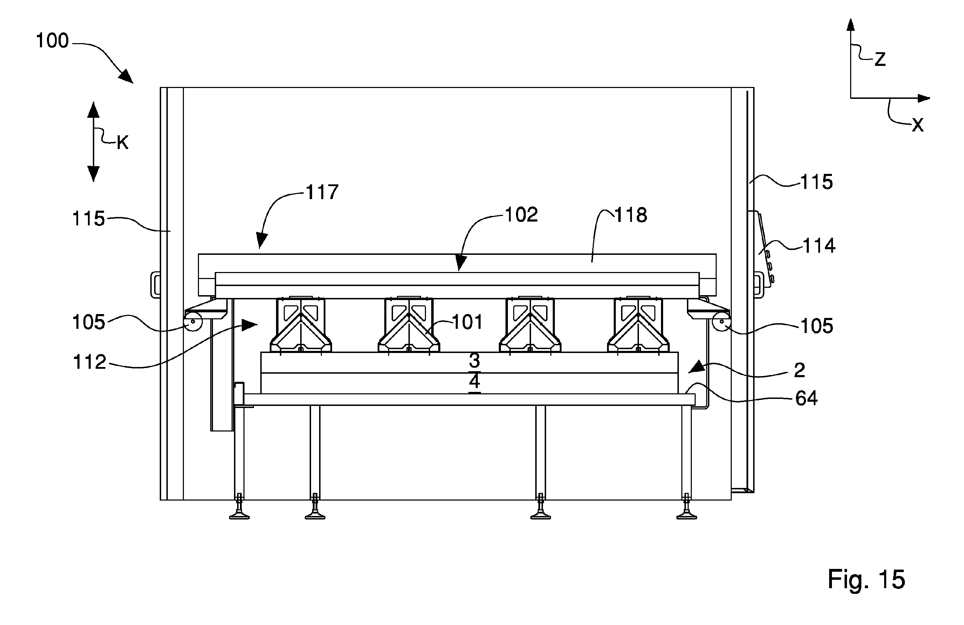

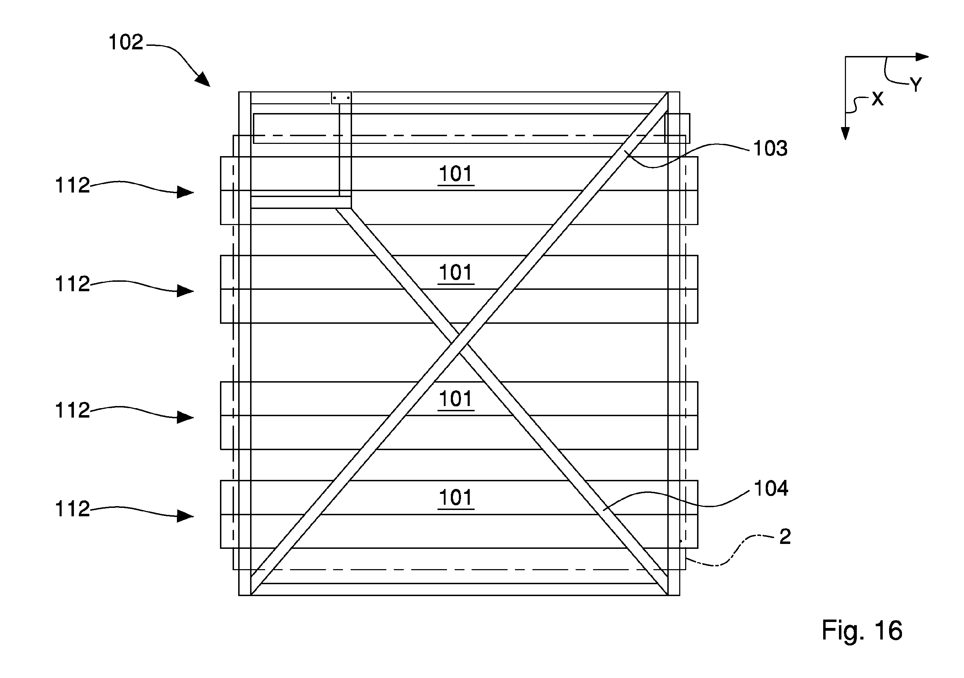

The machine 100 is shown in Figure 14 in a first raised operating configuration in which the slabs 3, 4 are mutually spaced apart and in Figure 15 in a second lowered operating configuration in which the slabs 3, 4 are superimposed to form the mattress 2 (shown with a dashed line in Figure 16).

The machine 100 comprises the first dispensing nozzle 58 and the second dispensing nozzle 59 that are slidably supported by a bridge element 117. The bridge element 117, which is movable substantially parallelly to the third axis Y, comprises guides extending along the second axis X obtained on a crosspiece element 118 of the bridge element 117 and arranged for enabling the dispensing nozzles 58, 59 to move along the second axis X. Also in this embodiment, the first dispensing nozzle 58 and the second dispensing nozzle 59 are mounted on the bridge element 117 aligned substantially vertically, i.e. rotated substantially by 180°, one facing upwards and the other facing downwards so as to distribute, in use, glue respectively on the first coupling surface 7 and on the second coupling surface 13.

The machine 100 comprises a control panel 114 and a protection structure 115 shown in Figures 14 and 15. The protection structure 115 is arranged for ensuring operation of the machine 100 in security by preventing access to the working plane 64 by operators whilst the machine 100 is operating.

In a further embodiment of the invention, which is not shown, the gripping means 12 is helped by suction-cup means to move the porous material slabs 3, 4.

In a still another embodiment of the invention, which is not shown, the gripping means may comprise a number of gripping units 112 other than four, in particular greater or less than four.

In a further embodiment of the invention, which is not shown, the longitudinal members 101 may have a cross section having any polygonal shape other than the triangular shape, or a circular or elliptical shape.

The operation of the machine 100 provides initially that the frame 102 and the gripping units 112 are arranged in a raised position and, after the first slab 3 is transferred onto the working plane 64 by conveyor belts, the gearmotor that moves the chains is driven so as to lower the gripping units 112 until the abutting walls 106 thereof contact the first flat surface 77 of the first slab 3, the needles 48 housed in the supporting-bar elements 101 being in a retracted position E so as not to protrude outside the abutting walls 106.

Subsequently, the actuators 120 arrange the needle elements 48 in an extended position D in which the needles 48 protrude outside the first walls 106 piercing the first flat surface 77 and thus the first slab 3.

Still subsequently, as shown in Figures 14 and 17, the gripping units 112 are moved away from the working plane 64, so as to lift the first slab 3 from the working plane 64. It should be noted that the gripping units 112 enable the first slab 3 to be lifted along the movement direction K so that the first slab 3 always remains planar, i.e. parallel to the working plane 64. In other words, despite the peculiarity of flexibility of the porous material, it is in this manner possible to raise the porous material as if it acted as a stiff body.

Subsequently, after positioning the second slab 4 on the working plane 64, the bridge element 117 is moved along the advance direction C to enable the glue-distributing means 14, which is suitably moved along the guides obtained on the crosspiece element 118, to move along the entire extent of the first slab 3 and of the second slab 4 and to distribute glue on the first coupling surface 7 and on the second coupling surface 13, in particular in corresponding points of the two slabs 3, 4.

Subsequently, the gripping units 112 is lowered along the first axis Z towards the working plane 64 until the first slab 3 is superimposed on the second slab 4 (Figure 15). In this manner, owing to the substantially uniform pressure exerted vertically by the abutting walls 106 on the first flat surface 77, the first coupling surface 7 is pressed against the second coupling surface 13 so as to enable the glue to be activated and thus to obtain an effective mutual gluing of the slabs 3, 4.

Still subsequently, the needles 48 are retracted and subsequently the gripping units 112 are moved away from the working plane 64 so as to return the gripping units 112 to the raised position.

Subsequently, the mattress 2 thus formed is transferred by the conveyor belt 62 onto an outlet conveyor belt that moves the thus formed mattress 2 away from the working plane 64.

It should be noted how the machine 1, 100 disclosed above enables mattresses 2 to be formed rapidly and effectively.

In fact, the invention illustrates a machine 1, 100, and a corresponding operating method, for moving and gluing porous material slabs 3, 4 that enables the slabs 3, 4 to be glued in a rapid and effective manner.

The machine according to the invention, owing to the needle elements 48, 49 that pierce the porous material, enables said slabs 3, 4, to be moved, i.e. enables the slabs 3, 4 to be raised and lowered, preventing the slab from sliding. The particular divergent configuration of the needle elements 48, 49 enables said slabs 3, 4 to be pierced without tearing or ripping the porous material with which said slabs are made. In other words, the needle elements 48, 49 according to the invention prevent scratches or holes remaining on the slabs 3, 4 after this slab has been pierced and raised by the needles 48. It should be noted that the needles 48 enable even very thin porous material slabs 3, 4 to be raised.

In other words, the machine 1 enables the operations that are usually performed manually by one or more operators to be significantly reduced and even eliminated.

Further, the glue-distributing means 14, comprising for example the dispensing nozzles 58, 59, enables the glue to be distributed evenly on at least the first coupling surface 7 and/or the second coupling surface 13, which enables the first slab 3 to be glued effectively to the second slab 4.

It should be noted that the gripping units 12, 112 exert a pressure that is almost homogenous and is distributed on the slabs 3, 4 that enables the glue to be activated to obtain more effective and resistant gluing of the slabs.

Variants and/or additions to what has been disclosed above and/or to what has been shown in the attached drawings are also possible.

## Claims

1. Machine for gluing porous material slabs (3, 4), in particular for making a mattress (2) or an insulating element, comprising a working plane (64) for supporting a first porous material slab (3) and a porous material second slab (4), glue-distributing means (14) that is movable for distributing glue on said first slab (3) and/or on said second slab (4), and gripping means (12; 112) for grasping and moving said first slab (3) and/or said second slab (4), **characterised in that** said gripping means comprises at least a gripping unit (12; 112) provided with a pair of needle elements (49, 48) arranged alongside and divergent, said needle elements being movable linearly between an extended position (D) in which said needle elements interact with, in particular pierce, said slabs (3, 4) and a retracted position (E) in which said needle elements do not interact with said slabs (3, 4).

2. Machine according to claim 1, wherein each needle element comprises an elongated, in particular substantially flat, body (49), provided with at least a needle (48) of almost flat shape.

3. Machine according to claim 2, wherein said needle element comprises a plurality of needles (48) fixed to said body (49) spaced apart and aligned along at least a row (108, 109).

4. Machine according to any preceding claim, in which said needle elements (48, 49) are arranged divergently so as to form an angle (α) comprised between 60° and 120°, in particular comprised between 70° and 90°.

5. Machine according to any one of claims 2 to 4, wherein said needle (48) is substantially straight.

6. Machine according to any preceding claim, wherein said gripping unit (12) comprises actuating means (120) for driving said needle elements (48, 49) between said extended position (D) and said retracted position (E).

7. Machine according to any preceding claim, wherein said gripping unit (12; 112) comprises an abutting wall (37; 106) substantially parallel to said working plane (64) and arranged for abutting on and pressing said slabs (3, 4) such as to enable the applied glue to be activated so as to glue said first slab (3) to said second slab (4).

8. Machine according to claim 7, wherein said abutting wall (37; 106) comprises openings (107) for the passage of said needle elements (48, 49).

9. Machine according to any preceding claim, wherein said gripping means comprises a plurality of gripping units (12, 112) arranged parallel and spaced apart from one another.

10. Machine according to any preceding claim, comprising supporting means (18, 22; 102) for supporting and moving said gripping means (12; 112) with respect to said working plane (64).

11. Machine according to any preceding claim, wherein said glue-distributing means (14) is movable parallelly to said working plane (64) and comprises means (58, 59; 69; 72) for distributing glue on a first surface (7) of said first slab (3) and on a second surface (13) of said second slab (4).

12. Method for gluing porous material slabs (3, 4), in particular for making a mattress (2) or an insulating element, comprising grasping a first porous material slab (3) and lifting the first porous material slab above a second porous material slab (4), distributing glue at least on a first surface (7) of said first slab (3) and/or a second surface (13) of said second slab (4), lowering said first slab (3) and superimposing the first slab on said second slab (4), **characterised in that** the method further comprises pressing together said first slab (3) and said second slab (4) with a set pressure to enable said glue to be activated so as to glue said slabs (3, 4).

13. Method according to claim 12, wherein said pressing comprises exerting a pressure that is uniform and distributed over the entire extent of said first slab (3).

14. Method according to claim 12 or 13, wherein said grasping comprises piercing said first slab (3) by needle elements (48, 49) arranged mutually alongside and divergent.

15. Method according to any preceding claim, wherein said grasping, lifting and lowering comprises maintaining said first slab (3) substantially planar and parallel to said second slab (4).
